(19) Europäisches Patentamt
European Patent Office
Office européen des brevets

(11) Veröffentlichungsnummer: **0 074 001**
**A1**

(12) # EUROPÄISCHE PATENTANMELDUNG

(21) Anmeldenummer: 82107683.3

(22) Anmeldetag: 23.08.82

(51) Int. Cl.³: C 07 F 7/10
C 08 L 83/04

(30) Priorität: 03.09.81 DE 3134931

(43) Veröffentlichungstag der Anmeldung: 16.03.83 Patentblatt 83/11

(84) Benannte Vertragsstaaten: AT BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Würminghausen, Thomas, Dr.
Christian-Hess-Strasse 65
D-5090 Leverkusen 1(DE)

(72) Erfinder: Saykowski, Franz, Dr.
Andreas-Gryphius-Strasse 1
D-5000 Köln 80(DE)

(72) Erfinder: Sattlegger, Hans, Dr.
Auf dem Heidchen 9
D-5074 Odenthal-Glöbusch(DE)

(54) **Aminoorganoaminosilane, Verfahren zu deren Herstellung und deren Verwendung.**

(57) Die vorliegende Erfindung betrifft neue Aminoorganoaminosilane, ein Verfahren zu deren Herstellung durch Umsetzung der entsprechenden Halogenorganohalogensilane mit entsprechenden Stickstoffverbindungen, sowie deren Verwendung, insbesondere als Haftmittel in vulkanisierenden Silicon-Systemen.

EP 0 074 001 A1

Croydon Printing Company Ltd.

0074001



BAYER AKTIENGESELLSCHAFT 5090 Leverkusen, Bayerwerk

Zentralbereich
Patente, Marken und Lizenzen Br/Bre

# Aminoorganoaminosilane, Verfahren zu deren Herstellung und deren Verwendung

Die vorliegende Erfindung betrifft neue Aminoorganoaminosilane, ein Verfahren zu deren Herstellung durch Umsetzung der entsprechenden Halogenorganohalogensilane mit Aminen sowie deren Verwendung in vulkanisierenden Silicon-Systemen.

Siliciumfunktionelle Silane sind als Vernetzer bereits bekannt (vgl. z.B. DE-AS 1 120 690, DE-AS 1 255 924). Aminoorganoaminosilane sind jedoch bisher nicht bekannt geworden, obwohl bereits eine Reihe von organofunktionellen - auch aminofunktionellen Silanen - hergestellt werden konnten (vgl. z.B. US-PS 3 346 588, DE-OS 1 244 181 und US-PS 3 779 703). Die bekannten Silane enthalten als siliciumfunktionelle Gruppen lediglich Alkoxygruppen jedoch keine anderen hydrolyseempfindlichen siliciumfunktionellen Gruppen, was jedoch für

viele Verwendungszwecke wünschenswert ist. Überraschenderweise wurde nun gefunden, daß es auch gelingt, solche Silane herzustellen, die sowohl in der Alkylseitenkette als auch am Siliciumatom Aminogruppen tragen und daß es sogar möglich ist, unter geeigneten Bedingungen unterschiedliche siliciumfunktionelle und organofunktionelle Aminogruppen in ein Silan einzuführen oder diese beiden unterschiedlichen Aminofunktionen durch Reaktion mit einem anderen Amin auszutauschen. Voraussetzung für alle diese Reaktionen ist, daß die Halogensubstituenten eines zugrunde liegenden Silans durch Wahl geeigneter Reaktionsbedingungen ausgetauscht werden können. So gelingt die Einführung z.B. der Cyclohexylaminogruppen in Halogenmethylhalogensilane erst bei ausreichend hohen Temperaturen, die Einführung von Amidogruppen gelingt jedoch im allgemeinen erst durch die Verwendung eines reaktiven Metallsalzes des Amides.

Gegenstand der vorliegenden Erfindung sind neue Verbindungen der allgemeinen Formel

$$(R^4R^3NR^5)_x\ \underset{R^6_z}{\underset{|}{Si}}(NR^1R^2)_y$$

wobei

$R^1$, $R^2$, $R^3$, $R^4$ unabhängig voneinander für Wasserstoff (wobei $R^1$ und $R^2$ bzw. $R^3$ und $R^4$ nicht gleichzeitig für Wasserstoff stehen), Alkyl, Cycloalkyl, Aryl, Alkenyl, Acyl, Benzyl oder einen mit dem N-Atom gebildeten Heterocyclus mit jeweils bis zu 10 C-Atomen steht,

$R^5$ ein geradkettiger oder verzweigter Alkylenrest mit bis zu 6 C-Atomen ist,

$R^6$ unabhängig voneinander ein Alkyl-, Alkoxy-, Cycloalkly-, Aryl-, Alkenylrest mit bis zu 6 C-Atomen ist,

x, y 1, 2 oder 3 ist und

z 4 - (x + y) ist.

Die erfindungsgemäßen Verbindungen können hergestellt werden indem man ein Halogensilan der allgemeinen Formel

$$(XR^5)_x\underset{R^6_z}{\underset{|}{Si}}-(X)_y$$

worin

X für Chlor oder Brom steht,

$R^5$, $R^6$ sowie x, y, z die obengenannte Bedeutung besitzen,

mit Stickstoffverbindungen der allgemeinen Formel

$$HNR^7R^8$$

wobei

$R^7$ und $R^8$ die gleiche Bedeutung wie $R^1$, $R^2$, $R^3$ oder $R^4$ annehmen können,

oder den entsprechenden Metallsalzen dieser Stickstoffverbindungen, gegebenenfalls in Gegenwart eines Lösungsmittels und/oder eines Säurefängers umsetzt.

Als Ausgangssubstanzen für das erfindungsgemäße Verfahren eignen sich z.B. die Chloro- und Bromosilane wie $BrCH_2(C_2H_5)SiBr_2$, $BrCH_2SiCl_3$, $BrCH_2(CH_3)_2SiBr$, $Br(CH_2)_4SiBr_3$, $Br(CH_2)_3(C_6H_5)SiBr_2$ und auch die entsprechenden Chlorverbindungen. Als Reaktionspartner für diese Halogensilane können gemäß dem erfindungsgemäßen Verfahren Amine, wie z.B. iso-Butylamin, Benzylamin, Cyclohexylamin, n-Butylamin, Diethylamin, Allylamin, Imidazol Verwendung finden. Statt der Amine können auch Amide, wie z.B. Acetamid, Propionamid oder Benzylamid eingesetzt werden.

Das erfindungsgemäße Verfahren wird im allgemeinen unter Zuhilfenahme von Lösungsmitteln, wie z.B. Toluol, Cyclohexan oder Xylol durchgeführt. Als Säurefänger werden Substanzen, wie z.B. Triethylamin eingesetzt; das eingesetzte Amin selbst kann jedoch ebenfalls diese Rolle übernehmen. Bevorzugt wird das erfindungsgemäße Verfahren bei der Siedetemperatur der Reaktionsmischung und unter Atmosphärendruck durchgeführt; es kann aber auch bei besonders reaktiven Substanzen unter Kühlung oder bei reaktionsträgen Verbindungen bei höheren Temperaturen und erhöhtem Druck gearbeitet werden.

Bevorzugte Beispiele der erfindungsgemäßen Substanzen sind:

$(C_2H_5)_2NCH_2(CH_3)Si[N(C_2H_5)_2]_2$

$i\text{-}C_4H_9NHCH_2(CH_3)Si(NHi\text{-}C_4H_9)_2$

$i\text{-}C_4H_9NHCH_2Si(NHi\text{-}C_4H_9)_3$

$C_3NH_3NCH_2(CH_3)Si(NC_3NH_3)_2$

$C_6H_{11}NHCH_2(CH_3)Si(NHC_6H_{11})_2$

$C_6H_5CON(CH_3)CH_2Si(OC_2H_5)_2[C_6H_5CON(CH_3)]$

$C_6H_5CON(CH_3)CH_2Si(OC_2H_5)[C_6H_5CON(CH_3)]_2$

$C_6H_5CON(CH_3)CH_2(CH_3)Si[C_6H_5CON(CH_3)]_2$
$C_6H_5CH_2NHCH_2(CH_3)Si(NHCH_2C_6H_5)_2$.

Die erfindungsgemäßen Verbindungen eignen sich hervorragend als Haftvermittler für verschiedene Untergründe auf die kalthärtende Siliconpasten aufgebracht werden sollen. Insbesondere ein geringer Zusatz an Cyclohexylmethyl-methyldicyclohexylaminosilan bewirkt bei der Zumischung in eine Siliconfugendichtungsmasse, die z.B. mit Acetat vernetzt wird, eine erhebliche Verbesserung der Hafteigenschaft. Diese "acetatvernetzenden" Systeme erlangten eine ganz erhebliche wirtschaftliche Bedeutung, haben jedoch den Nachteil, daß die Haftung auf Beton als unzureichend zu bezeichnen ist.

Z.B. dieses Problem wird durch Zusatz z.B. der o.a. erfindungsgemäßen Verbindung gelöst. Die Verbindungen werden bevorzugt in einem geeigneten Lösungsmittel z.B. Cyclohexan gelöst, z.B. im Verhältnis der Gewichte wie 1:10 und bevorzugt in Mengen von 1,0 bis 10,0 Gewichtsteilen in 100 Gewichtsteilen der kaltvernetzenden Siliconpaste eingesetzt. Derartige Pasten haben eine überraschend gute Betonhaftung, während die übrigen Hafteigenschaften im wesentlichen unverändert bleiben.

Anhand der folgenden Beispiele soll der Gegenstand der vorliegenden Erfindung noch näher erläutert werden:

Beispiel 1

50,2 g Chlormethyl-methyldichlorsilan werden in 0,2 l Toluol gelöst und langsam mit 304,7 g Cyclohexylamin versetzt, danach 12 Stunden am Rückfluß erhitzt, nach dem Erkalten filtriert und im Vakuum von leichtflüchtigen Bestandteilen befreit. Die Ausbeute beträgt 70 % vom eingesetzten Silan. Gemäß IR- und NMR-Spektren ergab sich die Bildung von $C_6H_{11}NHCH_2(CH_3)Si(NHC_6H_{11})_2$.

Beispiel 2

160 g Chlormethyl-methyldichlorsilan wurden unter Rühren langsam zu 1 l Iso-Butylamin zugetropft und 8 Stunden am Rückfluß erhitzt. Nach Zusatz von 1 l Cyclohexan wird filtriert und das Filtrat im Vakuum von flüchtigen Bestandteilen abgetrennt. Man erhielt die Verbindung $i\text{-}C_4H_9NHCH_2(CH_3)Si(NHi\text{-}C_4H_9)_2$.

Beispiel 3

160 g Chlormethyltrichlorsilan werden langsam zu 1,5 l i-Butylamin getropft, 8 Stunden am Rückfluß erhitzt, 1,8 l Cyclohexan werden nach dem Abkühlen zugesetzt, anschließend wird filtriert und im Vakuum werden dann die leichtflüchtigen Bestandteile abgetrennt. Man erhielt die Verbindung $i\text{-}C_4H_9NHCH_2Si(NHi\text{-}C_4H_9)_3$.

Beispiel 4

Eine Suspension von 108 g N-Methylbenzamid-Natrium im 500 ml Toluol wurde vorsichtig mit 140 g Chlormethyldiethoxychlorsilan versetzt und 1 Stunde am Rückfluß erhitzt. Vom Ungelösten filtriert man ab und entfernt im Vakuum die flüchtigen Bestandteile. Die erhaltene Verbindung wurde als

$C_6H_5CON(CH_3)CH_2Si(OC_2H_5)_2$ $C_6H_5CON(CH_3)$ identifiziert.

Beispiel 5

| | | |
|---|---|---|
| 61,5 | g | α,ω-Hydroxy-polydimethylsiloxan 50 000 m.Pa.s |
| 24,1 | g | α,ω-Trimethylsiloxy-polydimethylsiloxan 1000 m.Pa.s |
| 6,25 | g | Cyclohexylaminomethyl-methyl-dicyclohexylaminosilan in Cyclohexyn (1:10 im Gewichts-Verhältnis gelöst) |
| 4 | g | Ethyltriacetoxysilan |
| 0,9 | g | Dibutoxydiacetoxysilan |
| 6,25 | g | pyrogene Kieselsäure |
| 0,01 | g | Dibutylzinndiacetat |

wurden nacheinander in einem Planetenmischer in eine homogene Masse überführt und in luftdichte Kartuschen abgefüllt. Nach dem Auspressen der Masse - die ohne Veränderung der Eigenschaften des Materials und des daraus herstellbaren Gummis über ein halbes Jahr lagerstabil war - erhielt man bei Raumtemperatur unter dem

Einfluß der Feuchtigkeit der Luft einen Silicongummi mit den typischen mechanischen Eigenschaften der bekannten handelsüblichen, sogenannten "acetatvernetzenden" Siliconpasten. Die Pasten wurde in Form eines Stranges mit etwa einen Halbkreisradius von 0,5 cm auf Beton aufgetragen, 7 Tage an der Luft (23°C, 50 % rel. Luftfeuchtigkeit) und 7 Tage in Wasser gelagert. Die Haftung auf dem Beton wurde nach 7, 8, 10 und 14 Tagen beurteilt und als positiv bezeichnet, falls der Silicongummit nicht ohne hohäsiven Riß vom Untergrund entfernt werden konnten bzw. als negativ, wenn der Silicongummi sich adhäsiv vom Untergrund abziehen ließ. Die Proben zeigten ein positives Haftergebnis auf Beton nach der beschriebenen 14 tägigen Lagerung.

Beispiel 6

Die Siliconpaste des Beispiel 5 wurde hergestellt ohne den Zusatz der erfindungsgemäßen Substanz.

Die Betonhaftung war teils bereits nach 7 tägiger Trockenlagerung, in jedem Fall aber nach 1 tägiger Wasserlagerung negativ.

Patentansprüche

1. Verbindungen der allgemeinen Formel

$$(R^4R^3NR^5)_x\ \underset{R^6_z}{\underset{|}{Si}}(NR^1R^2)_y$$

wobei

$R^1$, $R^2$, $R^3$, $R^4$ unabhängig voneinander für Wasserstoff, Alkyl, Cycloalkyl, Aryl, Alkenyl, Acyl, Benzyl oder einen mit dem N-Atom gebildeten Heterocyclus mit jeweils bis zu 10 C-Atomen steht,

$R^5$ ein geradkettiger oder verzweigter Alkylenrest mit bis zu 6 C-Atomen ist,

$R^6$ ein Alkyl-, Alkoxy-, Cycloalkyl-, Aryl-, Alkenylrest mit bis zu 6 C-Atomen ist,

x, y 1, 2 oder 3 ist und

z 4 - ( x + y) ist.

2. Verfahren zur Herstellung von Verbindungen gemäß Anspruch 1, dadurch gekennzeichnet, daß man ein Halogensilan der allgemeinen Formel

$$(XR^5)_x\ \underset{R^6_z}{\underset{|}{Si}}-(X)_y$$

worin

X für Chlor oder Brom steht,

$R^5$ und $R^6$ sowie x, y, z die obengenannte Bedeutung besitzen,

mit Stickstoffverbindungen der allgemeinen Formel

$HNR^7R^8$

wobei
$R^7$ und $R^8$ die gleiche Bedeutung wie $R^1$, $R^2$, $R^3$ oder $R^4$ annehmen können,

oder den entsprechenden Metallsalzen dieser Stickstoffverbindungen, gegebenenfalls in Gegenwart eines Lösungsmittels und/oder eines Säurefängers umsetzt.

3. Verwendung der Verbindungen gemäß Anspruch 1 als Haftvermittler und/oder Primer für Ein- und Zweikomponenten-Silicon-RTV-Systeme.

4. Verwendung der Verbindungen gemäß Anspruch 1 als Vernetzer und/oder Kettenverlängerer in vulkanisierenden Silicon-Systemen.

Europäisches Patentamt

**EUROPÄISCHER RECHERCHENBERICHT**

0074001

Nummer der Anmeldung

EP 82 10 7683

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
| X | CHEMICAL ABSTRACTS, Band 69, Nr. 19, 4. November 1968, Seite 7238, Nr. 77337x, Columbus, Ohio, USA D. YA. ZHINKIN et al.: "Aminolysis of polyfunctional (chloroalkyl)chlorosilanes" & SH. OBSHCH. KHIM. 1968, 38(4), 900-902 * Zusammenfassung * | 1,2 | C 07 F 7/10<br>C 08 L 83/04 |
| X | CHEMICAL ABSTRACTS, Band 79, Nr. 7, 20. August 1973, Seite 370, Nr. 42602j, Columbus, Ohio, USA N.S. NAMETKIN et al.: "Reactions of secondary and tertiary triorgano-beta-aminoethysilanes" & IZV. AKAD. NAUK SSSR, SER. KHIM. 1973, (4), 865-870 * Zusammenfassung * | 1,2 | |
| | | | RECHERCHIERTE SACHGEBIETE (Int. Cl. 3) |
| | | | C 07 F 7/00<br>C 08 L 83/00 |

Der vorliegende Recherchenbericht wurde für alle Patentansprüche erstellt.

| Recherchenort | Abschlußdatum der Recherche | Prüfer |
|---|---|---|
| DEN HAAG | 29-11-1982 | SUTER M. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82